# EUROPEAN PATENT APPLICATION

(11) **EP 4 776 393 A1**
(43) Date of publication of application: **15.07.2026**
(21) Application number: 24954597.1
(22) Date of filing: 05.12.2024
(51) Int. Cl.: H01M 50/147

(54) **COVER PLATE ASSEMBLY AND BATTERY**

(30) Priority: 17.10.2024 CN 202422522605 U
(71) Applicant: Eve Power Co., Ltd., Jingmen, Hubei 448000 (CN)
(72) Inventor: The designation of the inventor has not yet been filed
(74) Representative: Nederlandsch Octrooibureau
(86) International application number: PCT/CN2024/136956
(87) International publication number: WO 2026/081315

(57) **Abstract**

The present application provides a cover plate assembly and a battery. The cover plate assembly includes a cover body, an insulating support part, and a supporting member. The cover body is provided with an explosion-proof valve. The insulating support part is arranged opposite to the cover body and is in contact with the cover body, and the insulating support part is provided with an air-exhausting port corresponding to the explosion-proof valve. The supporting member is installed on the insulating support part, and the supporting member is located between the cover body and a core package. A melting temperature of the supporting member is higher than a melting temperature of the insulating support part.

## Description

This application claims priority to Chinese Patent Application No. 202422522605.9 filed on October 17, 2024, the entire contents of which are incorporated herein by reference.

### TECHNICAL FIELD

The present application relates to the filed of energy storage technologies, and in particular, to a cover plate assembly and a battery.

### BACKGROUND

With the increasing maturity of lithium-ion battery technology, lithium-ion batteries are widely used as power batteries in electric vehicles and energy storage fields, leading to higher demands on the performance and safety of the lithium-ion batteries. In a traditional square lithium-ion battery, an insulating support part of a cover plate assembly is provided to press against a top of a core package, so as to limit the core package.

### SUMMARY

However, when the runaway temperature of the battery is too high, the insulating support part may completely melt at the high temperature, resulting in the lack of support between the core package and a cover body of the cover plate assembly. As a result, the core package may closely adhere to the cover body, thus blocking an explosion-proof valve and causing the explosion-proof valve to lose its pressure relief function. Consequently, during a cell failure process, a large amount of gas generated cannot be relieved through the explosion-proof valve, leading to cell swelling, battery explosion, and safety accidents.

In a first aspect, the present application provides a cover plate assembly. The cover plate assembly includes:
a cover body provided with an explosion-proof valve;
an insulating support part arranged opposite to the cover body, being in contact with the cover body, and provided with an air-exhausting port corresponding to the explosion-proof valve; and
a supporting member installed on insulating support part. The supporting member is located between the cover body and a core package, and a melting temperature of the supporting member is higher than melting temperature of the insulating support part.

In a second aspect, the present application provides a battery including the cover plate assembly.

### BENEFICIAL EFFECTS

In the cover plate assembly provided in the present application, the insulating support part is arranged opposite to and in contact with the cover body, and the insulating support part is provided with the air-exhausting port corresponding to the explosion-proof valve. This means that under normal circumstances, the insulating support part can provide the necessary support while ensuring that the explosion-proof valve can be smoothly opened for exhaust when needed. For example, when thermal runaway occurs in the core package and gas is generated inside the core package, the gas may be discharged through the air-exhausting port via the explosion-proof valve. Additionally, during thermal runaway, since the temperature of the gas exhausted from the core package is too high, the insulating support part is caused to be completely melt. However, since the melting temperature of the supporting member installed on the insulating support part is higher than the melting temperature of the insulating support part, the supporting member can maintain its structural integrity even after the insulating support part has been completely melted. This allows the supporting member to create a gap between the cover body and the core package, preventing the core package from coming into direct contact with the cover body. This design avoids the risk of the explosion-proof valve being blocked, ensuring that the explosion-proof valve can be opened properly to discharge the high-temperature and high-pressure gas, thereby significantly reducing the risk of battery explosion. In addition, since the insulating support part and the supporting member can simultaneously support the cover body, this design can distribute an action force of the core package acting on the cover body, thereby reducing occurrence of stress concentration on the cover body. By providing the supporting member, a part of heat generated by the core package is transferred to the cover body, while another part of the heat is transferred to the supporting member. In this way, it helps to quickly dissipate the heat generated by the core package, reducing the risk of local overheating in the core package.

### BRIEF DESCRIPTION OF DRAWINGS

FIG. 1 is an exploded schematic diagram of a cover plate assembly provided in some embodiments of the present application.
FIG. 2 is a partially enlarged schematic view of portion D shown in FIG. 1.
FIG. 3 is a schematic cross-sectional view a cover plate assembly provided in some embodiments of the present application.
FIG. 4 is a partially enlarged schematic view of portion A shown in FIG. 3.
FIG. 5 is a front view of a structure shown in FIG. 3.
FIG. 6 is a partially enlarged schematic view of portion B shown in FIG. 5.
FIG. 7 is a partially enlarged schematic view of portion C shown in FIG. 5.

### Explanation of reference numerals:

10, cover plate assembly; 1, cover body; 11, mounting hole; 12, installation groove; 13, explosion-proof valve;
2, insulating support part; 21, air-exhausting port; 22, supporting body; 23, supporting platform; 231, mounting groove; 232, installation hole; 24, via hole; 3, supporting member; 4, supporting unit; 41, first supporting unit; 42, second supporting unit; 5, pole; 51, base body; 52, post body; 6, sealing ring; 7, upper plastic loop; 71, looped body; 72, looped abutting-arm; 73, looped boss; 8, accommodating groove; 9, pressing loop.

### EMBODIMENTS OF THE INVENTION

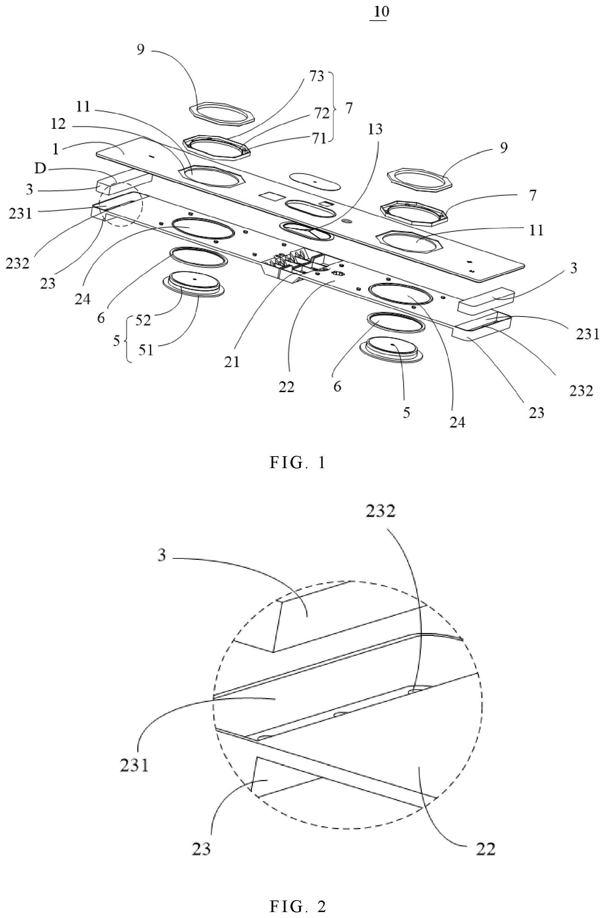

Referring to FIG. 1 to FIG. 4, the cover plate assembly 10 includes a cover body 1, an insulating support part 2, and a supporting member 3. The cover body 1 is provided with an explosion-proof valve 13. The insulating support part 2 is arranged opposite to the cover body 1 and in contact with the cover body 1. An air-exhausting port 21 corresponding to the explosion-proof valve 13 is provided on the insulating support part 2. The supporting member 3 is installed on the insulating support part 2. The supporting member 3 is located between the cover body 1 and a core package. A melting temperature of the supporting member 3 is higher than a melting temperature of the insulating support part 2.

In possible implementations of the present application, the insulating support part 2 is arranged opposite to and in contact with the cover body 1, and the insulating support part is provided with the air-exhausting port 21 corresponding to the explosion-proof valve 13. This means that under normal circumstances, the insulating support part 2 can provide the necessary support while ensuring that the explosion-proof valve 13 can be smoothly opened for exhaust when needed. For example, when thermal runaway occurs in the core package and gas is generated inside the core package, the gas may be discharged through the air-exhausting port 21 via the explosion-proof valve 13. Additionally, during thermal runaway, since the temperature of the gas exhausted from the core package is too high, the insulating support part 2 is caused to be completely melt. However, since the melting temperature of the supporting member 3 installed on the insulating support part 2 is higher than the melting temperature of the insulating support part 2, the supporting member 3 can maintain its structural integrity even after the insulating support part has been completely melted. This allows the supporting member 3 to create a gap between the cover body 1 and the core package, preventing the core package from coming into direct contact with the cover body 1. This design avoids the risk of the explosion-proof valve 13 being blocked, ensuring that the explosion-proof valve 13 can be opened properly to discharge the high-temperature and high-pressure gas, thereby significantly reducing the risk of battery explosion. In addition, since the insulating support part 2 and the supporting member 3 can simultaneously support the cover body, this design can distribute an action force of the core package acting on the cover body 1, thereby reducing occurrence of stress concentration on the cover body 1. By providing the supporting member 3, a part of heat generated by the core package is transferred to the cover body 1, while another part of the heat is transferred to the supporting member 3. In this way, it helps to quickly dissipate the heat generated by the core package, reducing the risk of local overheating in the core package.

It should be noted that a material of the cover body is a conductive metal, for example, the cover body may be made of aluminum, iron, or copper, and in the present application, the cover body primarily serves a conductive and connecting function.

In some possible implementations, the melting temperature of the supporting member 3 is defined as T, and T ≥ 500 °C. Thus, when the melting temperature of the supporting member 3 is set at 500 °C or above, it can maintain structural stability at a higher working temperature, and is less likely to soften or melt. When the melting temperature of the supporting member 3 is set to 500 °C or more, under the condition that the insulating support part 2 is melted, the support member 3 can continue to provide support between the core package and the cover body 1, ensuring that there is a gap between the cover body and the core package to form an exhaust channel, thereby preventing the core package from blocking the explosion-proof valve 13. When the melting temperature of the supporting member 3 is less than 500 °C, the supporting member 3 is easily melted, increasing the likelihood of the core package blocking the explosion-proof valve 13.

The melting temperature of the supporting member 3 may be 500 °C, 550 °C, 600 °C, 650 °C, 780 °C, 800 °C, 980 °C, 1000 °C, etc, and the melting temperature of the supporting member 3 may be selected as needed. The present application does not impose any limitations on this.

In some possible implementations, a material of the supporting member 3 includes ceramic or metal, allowing the supporting member 3 to continue to provide support between the cover body 1 and the core package after the insulating support part 2 melts during the thermal runaway of the core package, so as to prevent the core package from directly contacting closely with the cover body 1, avoid the risk of the explosion-proof valve 13 being blocked, and ensure that the explosion-proof valve 13 is opened normally when the gas is generated inside the core package excessively, thereby significantly reducing the risk of the battery explosion.

It should be noted that the metal may include nickel-based alloys, tungsten, molybdenum, tantalum, niobium, etc. In some possible implementations, the material of the supporting member 3 can be selected as needed, and the present application does not impose any restrictions on it.

In addition, a material of the insulating support part 2 includes PP plastic. A temperature resistance of the PP plastic ranges from 120 °C and 150 °C. When cell failure is occurred, a temperature of the cell reaches 300 °C or more, and when the temperature exceeds the temperature resistance of the insulating support part 2, the insulating support part 2 is melted. Of course, in other possible implementations, the material of the insulating support part 2 may further include silicone rubber, epoxy resin, or unsaturated polyester resin glass fiber reinforced molding compounds, etc., in some possible implementations, the present application does not impose limitations on this.

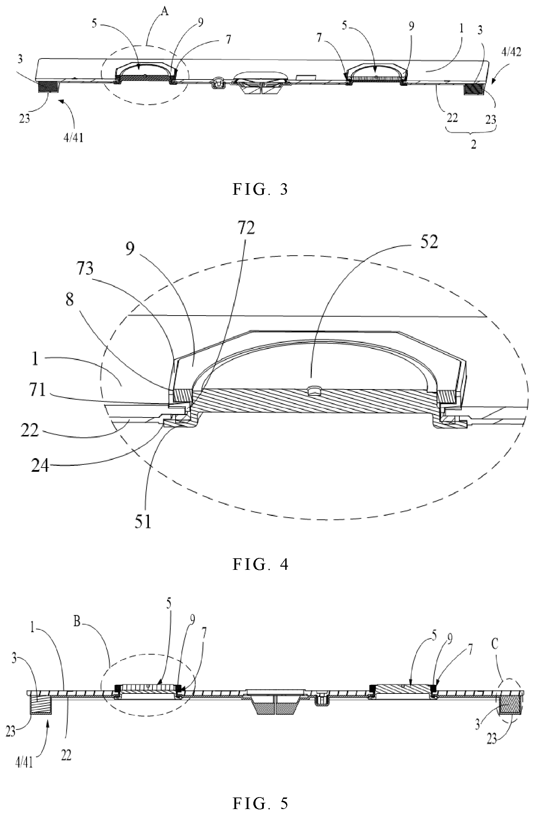

Referring to FIG. 1 and FIG. 3, in some possible implementations, the insulating support part 2 includes a supporting body 22 and a supporting platform 23. The supporting body 22 is arranged opposite to the cover body 1 and is in contact with the cover body 1, so that a contact area between the insulating support part 2 and the cover body 1 is increased, thereby improving the support strength of the insulating support part 2. The supporting platform 23 is connected to the supporting body 22, and the supporting platform 23 is protruded from the supporting body 22 in a direction toward the core package, so that the supporting platform 23 can be in contact with the core package, or the supporting platform 23 can separate the core package from the supporting body 22, thereby forming an exhaust channel between the supporting body 22 and the core package. The presence of the exhaust channel allows the gas to be discharged through the exhaust channel to the explosion-proof valve 13 when the core package needs pressure relief or undergoes thermal runaway. In addition, the formation of the exhaust channel helps to improve the heat dissipation of the core package.

It should be noted that a shape of the supporting platform 23 may vary. For example, in some possible implementations, the supporting platform 23 may be a cylinder. In yet another set of possible implementations, the supporting platform 23 may also be a looped-structure surrounding the air-exhausting port. In some possible implementations, the supporting platform 23 may be a cuboid, a cube, etc. In some possible implementations, the shape of the supporting platform 23 may be selected as needed, and the present application does not impose any restrictions on it.

Referring to FIG. 3, FIG. 5 and FIG. 7, in some possible implementations, the supporting member 3 is installed on the supporting platform 23, so that a structure of the cover plate assembly 10 is compact. In addition, the supporting member 3 is directly installed on the supporting platform 23, eliminating complicated installation steps and additional connecting parts. This design reduces installation difficulty and cost, improving installation efficiency.

It should be noted that in other possible implementations, the supporting member 3 may be installed on the supporting body 22. In some possible implementations, a specific installation position of the supporting member 3 may be selected as needed, and the present application does not impose any restrictions on it.

The supporting member 3 may be installed on the supporting platform 23 in various ways. For example, referring to FIG. 3, FIG. 5, and FIG. 7, in some possible implementations, the supporting platform 23 is provided with a mounting groove 231, and the supporting member 3 is installed in the mounting groove 231. This design of the mounting groove 231 allows the supporting member 3 to be securely installed on the supporting platform 23, preventing instability caused by looseness or displacement. The supporting member 3 is directly installed in the mounting groove 231 of the supporting platform 23 without complicated installation steps and additional fixing members, thus greatly reducing the installation difficulty and cost, and improving the installation efficiency. When the supporting member 3 needs to be replaced or repaired, the supporting member 3 can be directly taken out from the mounting groove 231 for replacement or repair, so that the maintenance work is easier and faster, and the maintenance cost and time are reduced. The design of the mounting groove 231 ensures a tight integration between the supporting member 3 and the supporting platform 23, enhancing the integrity of the insulating support part 2 and the supporting member 3, and this integrity enhances the aesthetic quality and reliability of the cover plate assembly 10.

In some possible implementations, the supporting member is snap-fixed in the mounting groove 231. In this way, the snap fixing ensures that the supporting member can be firmly installed in the mounting groove 231, making it less prone to loosening or displacement. The snap fixing method usually features relatively simple installation steps, requiring no complex tools or additional fasteners. As a result, it greatly reduces installation difficulty and cost, while improving installation efficiency. Meanwhile, in situations where the supporting member 3 needs to be replaced or adjusted, the snap-fit method also makes the disassembly process much simpler and quicker.

In some possible implementations, the supporting member 3 is glue-fixed in the mounting groove 231. In this way, The glue-fixing method can provide a strong adhesive force, ensure that the supporting member 3 is stably and firmly fixed in the mounting groove 231, and prevent the supporting member 3 from falling off from the mounting groove 231. The glue-fixing method does not require complicated equipment and tools, thus reducing the installation difficulty and cost of the supporting member 3. Because the glue-fixing method is simple and easy, it can greatly reduce installation time of the supporting member 3 and improves the installation efficiency of the supporting member 3.

It should be noted that, the feature where the supporting member 3 is snap-fixed in the mounting groove 231 and the feature where the supporting member 3 is glue-fixed in the mounting groove 231 can be set alternatively or simultaneously. When both features are set simultaneously, the supporting member 3 is stably and securely installed in the mounting groove 231. In addition, in some possible implementations, the supporting member may also be fixed in the mounting groove 231 using threaded components or magnetic structures. In some possible implementation, the present application does not impose any limitations on this.

Referring to FIG. 1, in some possible implementations, an opening of the mounting groove 231 is oriented toward the cover body 1, and this design makes the process of installing the supporting member 3 more intuitive and simple. The operator can easily align the supporting member 3 with the opening and push it into the mounting groove 231 without complicated positioning and adjustment steps, thereby saving installation time and labor costs. The opening of the mounting groove 231 is oriented toward the cover body 1, so that when the supporting member 3 is installed in the mounting groove 231, the opening can be covered by the cover body 1, the supporting member 3 can be prevented from falling off from the opening of the mounting groove 231, and in addition, it helps to maintain the neat and aesthetic appearance of the cover plate assembly 10. When the supporting member 3 needs to be maintained or replaced, the operator can easily remove or reinstall the supporting member 3 through the opening, thus avoiding complicated disassembly steps and additional tool requirements, thereby simplifying the maintenance process and reducing maintenance costs.

It should be noted that in other possible implementations, the opening of the mounting groove 231 may be provided away from the cover body 1, or the opening of the mounting groove 231 may be provided on a sidewall of the supporting platform 23 connected to the supporting body 22. In some possible implementations, a specific orientation of the opening of the mounting groove 231 may be set as needed, and the present application does not impose any restrictions on it.

In some possible implementations, a thickness of the supporting member 3 is less than or equal to a depth of the mounting groove 231. In this way, ensuring that the thickness of the supporting member 3 does not exceed the depth of the mounting groove 231 can effectively prevent the supporting member 3 from protruding from a surface of the mounting groove 231 after installation, thereby reducing a space occupation of the supporting member 3 in a height direction of the battery cell and ensuring the compactness of the structure of the cover plate assembly 10 in the height direction of the battery cell.

There are various ways to install the supporting member 3 on the supporting platform 23. For example, referring to FIG. 1 and FIG. 3, in some possible implementations, the supporting platform 23 is provided with a plurality of installation holes 232 arranged at intervals. The supporting member 3 includes a plurality of supporting posts installed in the plurality of installation holes 232. In this way, the supporting posts are installed on the supporting platform 23 through the installation holes 232 arranged at intervals, enabling uniform support for the supporting platform 23. This uniform support design helps prevent deformation or damage to the supporting platform 23 caused by excessive force at a single point. In addition, the installation and disassembly process of the supporting post becomes simple and quick through the matching of the pre-set installation hole 232 and the supporting post, reducing maintenance costs and time. If one supporting post is damaged or needs to be replaced, other supporting posts can still provide support.

In some possible implementations, a diameter of the installation hole 232 is defined as D, and 1 mm ≤ D ≤ 20 mm. in this way, the diameter of installation hole 232 is preventing from being too large (greater than 20 mm) to weaken the strength of the supporting platform 23, and the diameter of installation hole 232 is preventing from being too small (less than 1 mm) to result in processing difficulties. The diameter of the installation hole 232 ranges from 1 mm to 20 mm, facilitating machining while maintaining the strength of the supporting platform 23, thus preventing deformation of the supporting platform 23.

It should be noted that the diameter of the installation hole 232 may be 1 mm, 2 mm, 4 mm, 5 mm, 7 mm, 10 mm, 13 mm, 16 mm, 19 mm, or 20 mm, etc. The diameter of the installation hole 232 can be set as needed, and the present application does not impose any restrictions on it.

Referring to FIG. 3 and FIG. 5, in some possible implementations, the supporting platform 23 and the supporting member 3 together form a supporting unit 4. At least two supporting units 4 are provided, and the at least two supporting units 4 are arranged at intervals, so that multi-point support between the cover body 1 and the core package is realized, improving the stability of the support. The spaced arrangement of the at least two supporting units 4 enables a more uniform distribution of the load on the cover body 1. In addition, the concentrated stress on a single one of the supporting units 4 is reduced, thereby prolonging the service life of both the supporting unit 4 and the cover body 1.

It should be noted that the supporting member 3 has a variety of shapes, and for example, the supporting member 3 may be configured as an annular shape, the supporting member 3 may be configured as a spherical shape, or the supporting member 3 may be configured as a cubic shape. In some possible implementations, the shape of the supporting member 3 may be set as needed, and the present application does not impose any restrictions on it.

It should be noted that two, three, four or even more supporting units 4 may be provided. In some possible implementations, the present application does not limit the specific number of supporting units 4. In addition, when two supporting units 4 are provided, the two supporting units 4 may be provided on both sides of the air-exhausting port 21 along a length direction of the cover body 1, or the two supporting units 4 may be provided on both sides of the air-exhausting port 21 along a width direction of the cover body 1. When three or more supporting units 4 are provided, a plurality of the supporting units 4 are provided on a peripheral side of the air-exhausting port 21. In some possible implementations, the number and layout of the supporting units 4 can be adjusted according to actual scenarios and requirements, and the present application does not impose any restrictions on it.

Tabs are typically configured in batteries and other energy storage devices as input and output terminals for electrical energy. An installation space for the tabs must maintain a certain degree of clarity and unobstructedness to ensure the reliability and safety of electrical connections. In some possible implementations, a length of the cover body 1 is defined as L, a width of the supporting unit 4 along a length direction of the cover body 1 is defined as K, and K = aL, where a represents a coefficient, and 0.05 ≤ a ≤ 0. 3. In this way, by reasonably controlling the width K of the supporting unit 4, it is ensured that the supporting unit 4 has sufficient strength to support between the cover body and the core package, and avoids occupying the installation space of a tab, making the installation operation of the tab simple. When the value of a is less than 0.05, although the width of the supporting unit 4 is relatively narrow, leaving more space for the installation of the tab, the strength of the supporting unit 4 is insufficient, making it prone to deformation and thereby affecting the support effect. When the value of a is greater than 0.3, the width of the supporting unit 4 is too large, occupying the installation space of the tab, thereby resulting in difficulty in the installation of the tab.

Referring to FIG. 3 and FIG. 5, in some possible implementations, the plurality of the supporting units 4 include a first supporting unit 41 and a second supporting unit 42. The first supporting unit 41 and the second supporting unit 42 are respectively connected to both ends of the supporting body 22. In this way, a stable supporting structure is formed, allowing an exhaust channel to be formed between the cover body 1 and the core package. This facilitates the high-pressure gas to be discharged from the explosion-proof valve 13 through the exhaust channel when the core package is thermally failed, and at the same time, the first supporting unit 41 and the second supporting unit 42 can also avoid occupying the installation space of the tab, making the installation process of the tab simple.

Referring to FIG. 1, FIG. 4, and FIG. 6, in some possible implementations, the cover body 1 is provided with two mounting holes 11 along a thickness direction of the cover body 1, and the insulating support part 2 is provided with two via holes 24 corresponding to the two mounting holes 11. A hole diameter of each via hole 24 is greater than a hole diameter of the corresponding mounting hole 11. The cover plate assembly 10 also includes two poles 5. Each pole 5 includes a base body 51 and a post body 52 protruding from the base body 51. Peripheral edges of the two base bodies 51 are respectively in contact with inner sidewalls of the two via holes 24, allowing the via holes 24 to radially position the base bodies 51 and prevent the poles 5 from moving radially along the via holes 24. Two post bodies 52 are respectively adapted to pass through the two via holes 24 and correspondingly extend into the two mounting holes 11, facilitating the subsequent connection operation of the poles 5 with other components for electrical connection.

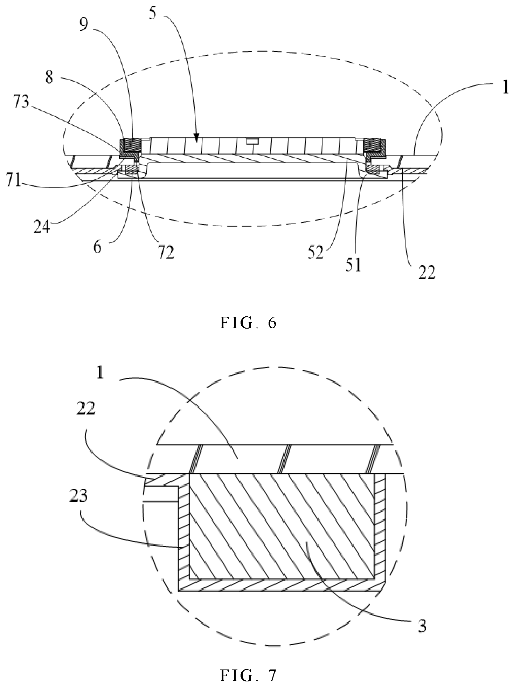

Referring to FIG. 4 and FIG. 6, it is shown that the inner sidewall of the via hole 24 is provided in a step to form a step surface facing away from the cover body 1. The step surface is in contact with an end surface of the base body 51 facing the cover body 1. This design of the step surface increases a contact area between the inner sidewall of the via hole 24 and the base body 51, thereby enhancing the connection strength between the two and improving the overall structural stability of the pole 5. In addition, the step surface provides a definite positioning reference for the base body 51 in an axial direction, ensuring that during installation, the step surface aligns with the end surface of the base body 51 facing the cover body 1. This facilitates precise alignment and ensures that the pole 5 can be accurately and stably installed onto the cover body 1. When the step surface is in contact with the end surface of the base body 51 facing the cover body 1, the step surface can limit the base body in the axial direction, prevent axial displacement or wobbling of the base body 51, thereby ensuring the accuracy and reliability of the installation of the pole 5.

Referring to FIG. 1, FIG. 3 and FIG. 6, in some possible implementations, the cover plate assembly 10 further includes two sealing rings 6. The two sealing rings 6 are respectively sleeved on two post bodies 52, and each sealing ring 6 is configured to seal a gap between the cover body 1 and the base body 51. In this way, the primary function of the sealing rings 6 is to provide sealing, and they are fitted closely onto the post bodies 52, effectively preventing gases, liquids, or solid particles from leaking out of or entering through the gap between the cover body 1 and the base body 51. The seal loop 6 can reduce direct contact between the post body 52 and the cover body 1, thereby reducing wear due to friction and prolonging the service life of the pole 5. In the harsh working environment, such as high temperature, high pressure, high humidity, etc., the sealing ring 6 can maintain stable sealing performance and ensure the reliable operation of the core package. The installation of the sealing ring 6 is relatively simple, and it only needs to be fitted on the post body 52, without complicated operation.

Referring to FIG. 1 and FIG. 3, in some possible implementations, the cover plate assembly 10 further includes two upper plastic loops 7. The two upper plastic loops 7 are respectively sleeved on the two post bodies 52. A side of each upper plastic loop 7 facing away from the post body 52 is at least partially configured to be in contact with the inner sidewall of the corresponding mounting hole 11. In this way, a tight contact between the upper plastic loop 7 and the inner sidewall of the mounting hole 11 provides an additional sealing layer for the connection between the post body 52 and the cover body 1. This double sealing design (i.e. the dual action of the sealing ring 6 and the upper plastic loop 7) can effectively prevent the penetration of gas, liquid or solid particles and improve the sealing performance of the entire cover plate assembly 10. The upper plastic loop 7 serves as a buffer layer, which can reduce the impact and wear of the post body 52 on the inner sidewall of the mounting hole 11 during installation or use, thereby prolonging the service life of the pole 5. The presence of the upper plastic loop 7 further isolates electrical contact between the post body 52 and the cover body 1, improving the safety of a battery with the cover plate assembly 10. The tight fit between the upper plastic loop 7 and the inner sidewall of the mounting hole 11 helps to fix a position of the post body 52 and prevent it from loosening or deviating during the working process, thereby improving the installation stability of the cover plate assembly 10.

Referring to FIG. 1, FIG. 4, and FIG. 6, in some possible implementations, each upper plastic loop 7 includes a looped body 71 and a looped abutting-arm 72 extending from the looped body 71 toward the base body 51. Two looped bodies 71 are both installed on a side of the cover body 1 facing away from the insulating support part 2, two looped abutting-arms 72 are respectively sleeved on the two post bodies 52, and the looped abutting-arm 72 is in contact with the inner sidewall of the corresponding mounting hole 11. In this way, the looped abutting-arm 72 extends circumferentially along the post body 52, making full contact with the inner sidewall of the mounting hole 11, providing all-around sealing protection, and reducing the risk of localized leakage. In addition, the looped abutting-arm 72 can also limit the post body 52, prevent the post body 52 from moving along a radial direction of the mounting hole 11, and improve the installation stability of the pole 5. Since the looped abutting-arm 72 and the looped body 71 are connected, and are both installed on the side of the cover body 1 facing away from the insulating support part 2, the movement of the looped abutting-arm 72 toward the supporting member 3 can be avoided, and the looped abutting-arm 72 can always maintain a good sealing effect and limiting effect.

Referring to FIG. 1, in some possible implementations, two installation grooves 12 are provided on a side of the cover body 1 facing away from the insulating support part 2. A bottom wall of each installation groove 12 is provided with one mounting hole 11 penetrating through the bottom wall. The two looped bodies 71 are respectively installed in the two installation grooves 12. In this way, the design of the installation grooves 12 provides precise mounting positions for the looped bodies 71, ensuring the looped bodies 71 can be accurately installed at the predetermined positions, avoiding misalignment or insecure installation. Due to the presence of the installation groove 12, the looped body 71 can be easily embedded into the installation groove 12, facilitating the looped abutting-arm 72 to be in contact with the inner sidewall of the mounting hole 11. This installation method simplifies the installation steps of the looped body 71, reduces installation difficulty, and improves installation efficiency.

Referring to FIG. 1, in some possible implementations, each looped body 71 is provided with a looped boss 73 protruding from a side away from the cover body 1. The looped boss 73 and the post body 52 are arranged opposite to and spaced apart from each other, so that an accommodating groove 8 is formed between the looped boss 73 and the post body 52. The cover plate assembly 10 further includes two pressing loops 9. The two pressing loops 9 are respectively installed in the two accommodating grooves 8 and sleeved on the two post bodies 52. Each pressing loop 9 is in contact with a bottom wall of the accommodating groove 8 and is connected to the post body 52. In this way, the tight abutment of the pressing loop 9 with the bottom wall of the accommodating groove 8 and the connection of the pressing loop 9 with the post body 52 effectively restrict the movement of the pole 5 along the axial direction of the mounting hole 11. When the pressing loop 9 is installed into the accommodating groove 8, the pressing loop 9 can be in close contact with the looped boss 73 and the post body 52, thereby enhancing the sealing performance of the cover plate assembly 10. Due to the tight contact between the pressing loop 9 and the bottom wall of the accommodating groove 8, as well as the connection between the pressing loop 9 and the post body 52, the risk of leakage caused by improper installation or loosening is reduced. This design improves the sealing reliability of the cover plate assembly 10 and prolongs the service life of the cover plate assembly 10.

Potential implementations of the present application also provide a battery. The battery includes the cover plate assembly 10. A specific structure of the cover plate assembly 10 refers to the above implementations. Since the battery applies all the technical solutions of all the above implementations, the battery has at least all the of beneficial effects brought by the technical solutions of the above implementations, and will not be repeatedly described herein.

## Claims

1. A cover plate assembly, comprising:
a cover body provided with an explosion-proof valve;
an insulating support part arranged opposite to the cover body, being in contact with the cover body, and provided with an air-exhausting port corresponding to the explosion-proof valve; and
a supporting member installed on the insulating support part, wherein the supporting member is located between the cover body and a core package, and a melting temperature of the supporting member is higher than a melting temperature of the insulating support part.

2. The cover plate assembly according to claim 1, wherein the melting temperature of the supporting member is defined as T, and T ≥ 500 °C.

3. The cover plate assembly according to claim 2, wherein a material of the supporting member comprises ceramic or metal.

4. The cover plate assembly according to any one of claim 1 to claim 3, wherein the insulating support part comprises:
a supporting body arranged opposite to the cover body and being in contact with the cover body, wherein the air-exhausting port is provided on the supporting body; and
a supporting platform connected to the supporting body, wherein the supporting platform is protruded from the supporting body in a direction toward the core package, such that an exhaust channel is formed between the supporting body and the core package.

5. The cover plate assembly according to claim 4, wherein the supporting member is installed on the supporting platform.

6. The cover plate assembly according to claim 5, wherein the supporting platform is provided with a mounting groove, and the supporting member is installed in the mounting groove.

7. The cover plate assembly according to claim 6, wherein the supporting member is snap-fixed in the mounting groove, and/or the supporting member is glue-fixed in the mounting groove.

8. The cover plate assembly according to claim 6 or claim 7, wherein an opening of the mounting groove is oriented toward the cover body, and/or a thickness of the supporting member is less than or equal to a depth of the mounting groove.

9. The cover plate assembly according to any one of claim 5 to claim 8, wherein the supporting platform is provided with a plurality of installation holes arranged at intervals, and the supporting member comprises a plurality of supporting posts installed in the plurality of installation holes.

10. The cover plate assembly according to claim 9, wherein a diameter of each of the installation holes is defined as D, and 1 mm ≤ D ≤ 20 mm.

11. The cover plate assembly according to any one of claim 4 to claim 10, wherein the supporting platform and the supporting member together form a supporting unit, at least two supporting units are provided, and the at least two supporting units are arranged at intervals.

12. The cover plate assembly according to claim 11, wherein a length of the cover body is defined as L; and
a width of the supporting unit along a length direction of the cover body is defined as K, and K = aL, where a represent a coefficient, and 0.05 ≤ a ≤ 0.3.

13. The cover plate assembly according to claim 11 or claim 12, wherein a plurality of the supporting units comprise a first supporting unit and a second supporting unit, and the first supporting unit and the second supporting unit are respectively connected to both ends of the supporting body.

14. The cover plate assembly according to any one of claim 1 to claim 10, wherein the cover body is provided with two mounting holes along a thickness direction of the cover body;
the insulating support part is provided with two via holes corresponding to the two mounting holes, and a hole diameter of each of the via holes is greater than a hole diameter of a corresponding one of the mounting holes; and
the cover plate assembly further comprises two poles, each of the poles comprises a base body and a post body protruding from the base body, peripheral edges of two base bodies are respectively in contact with inner sidewalls of the two via holes, and two post bodies are respectively adapted to pass through the two via holes and correspondingly extend into the two mounting holes.

15. The cover plate assembly according to claim 14, further comprising two sealing rings, wherein the two sealing rings are respectively sleeved on the two post bodies, and each of the sealing rings is configured to seal a gap between the cover body and the base body.

16. The cover plate assembly according to claim 14 or claim 15, further comprising two upper plastic loops, wherein the two upper plastic loops are respectively sleeved on the two post bodies, and a side of each of the upper plastic loops facing away from the post body is at least partially configured to be in contact with an inner sidewall of a corresponding one of the mounting holes.

17. The cover plate assembly according to claim 16, wherein each of the upper plastic loops comprises a looped body and a looped abutting-arm extending from the looped body toward the base body, two looped bodies are both installed on a side of the cover body facing away from the insulating support part, two looped abutting-arms are respectively sleeved on the two post bodies, and the looped abutting-arm is in contact with the inner sidewall of the corresponding one of the mounting holes.

18. The cover plate assembly according to claim 17, wherein two installation grooves are provided on a side of the cover body facing away from the insulating support part, and a bottom wall of each of the installation grooves is provided with one of the mounting holes penetrating through the bottom wall; and
the two looped bodies are respectively installed in the two installation grooves.

19. The cover plate assembly according to claim 17 or claim 18, wherein a looped boss is provided protruding from a side of each of the looped bodies facing away from the cover body, the looped boss is arranged opposite and spaced apart from the post body such that an accommodating groove is formed between the looped boss and the post body; and
the cover plate assembly further comprises two pressing loops, the two pressing loops are respectively installed in two accommodating grooves, and each of the pressing loops is in contact with a bottom wall of the accommodating groove and is connected with the post body.

20. A battery, comprising the cover plate assembly of any one of claim 1 to claim 19.
